# EUROPÄISCHE PATENTSCHRIFT

(11) **EP 3 873 702 B1**
(45) Veröffentlichungstag und Bekanntmachung des Hinweises auf die Patenterteilung: **28.12.2022**
(21) Anmeldenummer: 19816499.8
(22) Anmeldetag: 28.10.2019
(51) Int. Cl.: B25J 9/16, G05B 19/409

(54) **VERFAHREN ZUM BETREIBEN EINES MASCHINENSTEUERUNGSSYSTEMS SOWIE MASCHINENSTEUERUNGSSYSTEM**
METHOD FOR OPERATING A MACHINE CONTROL SYSTEM, AND MACHINE CONTROL SYSTEM
PROCÉDÉ DE FONCTIONNEMENT D'UN SYSTÈME DE COMMANDE DE MACHINE ET SYSTÈME DE COMMANDE DE MACHINE

(30) Priorität: 31.10.2018 AT 509382018
(43) Veröffentlichungstag der Anmeldung: 08.09.2021
(73) Patentinhaber: KEBA Industrial Automation GmbH, 4040 Linz (AT)
(72) Erfinder: LEHNER, Bernhard, 4242 Hirschbach (AT)
(74) Vertreter: Burger, Hannes
(86) Internationale Anmeldenummer: PCT/AT2019/060356
(87) Internationale Veröffentlichungsnummer: WO 2020/087098

(56) Entgegenhaltungen:
- EP-A1- 1 890 210
- EP-A1- 2 048 557

## Beschreibung

Die Erfindung betrifft ein Verfahren zum Betreiben eines Maschinensteuerungssystems mit wenigstens einer Maschinensteuerung zur Ausführung von Maschinenoperationen. Das Maschinensteuerungssystem umfasst wenigstens ein mobiles, von einer Bedienperson tragbares Handbediengerät zur funktionalen Beeinflussung von wenigstens einer der Maschinensteuerungen, welches Handbediengerät wenigstens ein Bedienelement zur manuellen Beeinflussung von Maschinenoperationen und wenigstens eine Benutzerschnittstelle mit einem Display zur Beobachtung oder Kontrolle der Maschinenoperationen durch eine Bedienperson aufweist, und welches Handbediengerät zumindest ein Nothalt-Betätigungselement zur Beendigung von potentiell gefahrbringenden Maschinenoperationen umfasst, wobei die jeweils vorliegenden, von einer Bedienperson manuell aktivier- und veränderbaren Betätigungszustände des zumindest einen Nothalt-Betätigungselements über wenigstens eine Übertragungsschnittstelle in einen Nothalt-Sicherheitsschaltkreis oder in ein Sicherheits-Bussystem der ausgewählten oder aktiv angebundenen Maschinensteuerung eingekoppelt werden. Zudem betrifft die Erfindung ein entsprechendes Maschinensteuerungssystem.

Ein gattungsgemäßes Maschinensteuerungssystem ist beispielsweise aus der WO2018/039692A1, welche auf die Anmelderin zurückgeht, bekannt. Dabei wird mittels einer datentechnischen Kennung des Handbediengeräts überprüft, ob bzw. in welcher Form das Handbediengerät mit der jeweiligen Maschinensteuerung steuerungstechnisch gekoppelt werden kann. Mit diesem zumindest teilautomatisiert ausgeführten Kompatibilitätscheck können der erzielbare Nutzungskomfort und auch die Sicherheit des Steuerungssystems gesteigert werden. Durch benutzerseitige Irrtümer oder durch ein benutzerseitiges Fehlverhalten können jedoch potentiell kritische Situationen nicht völlig ausgeschlossen werden.

Die EP1890210A1 beschreibt ein Maschinensteuerungssystem bei welchem der aktuelle Betriebszustand von Bedienelementen, welche zur Steuerung einer Prozessanlage vorgesehen sind, flexibel gekennzeichnet wird. Dabei wird ein aktiver und ein passiver Betriebszustand des wenigstens einen Bedienelementes einer Steuervorrichtung gekennzeichnet, wobei im aktiven Betriebszustand des Bedienelementes eine Prozessfunktion eines Bereiches der Prozessanlage gesteuert wird. Hierzu werden die Steuervorrichtung mit der Prozessanlage verbunden, das Bedienelement zu der Prozessanlage funktional zugeordnet, und der Betriebszustand des Bedienelementes nach erfolgreicher funktionaler Zuordnung als aktiv gekennzeichnet. Die jeweilige Zuordnung kann durch unterschiedliche farbliche Kennzeichnungen erfolgen. Farbige Lichtquellen unmittelbar an den jeweiligen Maschinen oder Prozessbereichen ermöglichen die Erkennbarkeit der jeweiligen Zuordnung zwischen Bedienelement und Maschine.

Aufgabe der vorliegenden Erfindung war es, die Nachteile des Standes der Technik zu überwinden und ein Verfahren sowie eine Vorrichtung zur Verfügung zu stellen, mittels derer eine Steuerung von Maschinen bzw. ein Betreiben eines Maschinensteuerungssystems noch sicherer und zugleich möglichst komfortabel gestaltet werden kann.

Diese Aufgabe wird durch ein Verfahren und eine Vorrichtung gemäß den Ansprüchen gelöst.

Das erfindungsgemäße Verfahren zum Betreiben eines Maschinensteuerungssystems umfasst die Schritte:
- schematisches Abbilden des Maschinensteuerungssystems oder von Teilbereichen des Maschinensteuerungssystems auf dem Display des Handbediengeräts;
- schematisches Abbilden des effektiven Wirkungsbereiches oder der effektiven Wirkungsbereiche von dem zumindest einen Nothalt-Betätigungselement am Handbediengerät mittels dem Display des Handbediengeräts und zudem mittels selektiver, vorzugsweise einfehlersicherer Ansteuerung von zumindest einem Leuchtmittel am Handbediengerät, welches zumindest eine Leuchtmittel beispielsweise im Umfangsbereich oder in einem Randbereich des Displays positioniert sein kann, und/oder durch vorzugsweise einfehlersichere Ansteuerung von zumindest einem diskret ausgebildeten Leuchtmittel in oder an dem zumindest einen Nothalt-Betätigungselement am Handbediengerät.

Ein Vorteil der erfindungsgemäßen Maßnahmen liegt darin, dass dadurch potentiell sicherheitskritische Zustände infolge eines Irrtums bzw. aufgrund eines instabilen Erinnerungsvermögens einer Bedienperson hintan gehalten werden können. Insbesondere kann einer Bedienperson durch die erfindungsgemäßen klar signalisiert werden, auf welchen Wirkungsbereich bzw. auf welche Wirkungsbereiche des Maschinensteuerungssystems die Verfügbarkeit des Nothalt-Betätigungselements am mobilen Handbediengerät beschränkt ist. Dies ist vor allem bei Handbediengeräten mit großem Aktionsradius bzw. relativ langer Kabelverbindung, oder bei völlig drahtlos an das Maschinensteuerungssystem koppelbaren bzw. angekoppelten Handbediengeräten von erhöhter Bedeutung. Aber auch durch Irrtümer, durch Vergesslichkeit, oder durch einen Wechsel der zuständigen Bedienpersonen kann eine Fehlbeurteilung der Wirksamkeit bzw. der geltenden Nothalt-Wirkungsbereiche des Nothalt-Betätigungselements am Handbediengerät eintreten - diese Problemsituationen können nunmehr durch die erfindungsgemäßen Maßnahmen minimiert bzw. hintan gehalten werden. Durch die selektive Ansteuerung bzw. Aktivierung des zumindest einen Leuchtmittels am Handbediengerät kann außerdem eine besonders unmissverständliche Signalisierung des Nothalt-Wirkungsbereiches bzw. der Nothalt-Wirkungsbereiche erzielt werden. Das zumindest eine Leuchtmittel kann dabei diskret ausgeführt sein, beispielsweise in Form von mehreren LED. Das zumindest eine Leuchtmittel kann aber auch als integrale Komponente ausgeführt sein, beispielsweise in Form einer 7-Segmentanzeige oder in Form einer Punktmatrix-Anzeige mit einer Mehrzahl von gruppierten Leuchtmitteln.

Hinzu kommt, dass allfällige Diskrepanzen zwischen der Anzeigeinformation des Display und der Anzeigeinformation des zumindest einen Leuchtmittels von der Bedienperson unmittelbar bemerkt werden können und auf eine unplausiblen Zustand bzw. auf eine allfällige Störung im Maschinensteuerungssystem hinweisen können. Die Anzeige des/der Nothalt-Wirkungsbereiche mittels dem Display und die Anzeige des/der Nothalt-Wirkbereiche mittels dem zumindest einen Leuchtmittel erfolgt vorzugsweise simultan bzw. gemeinsam. Die Bedienperson kann somit als zusätzliche menschliche Kontrollinstanz fungieren, nachdem die doppelt ausgegebene Information über den Nothalt-Wirkungsbereich, welcher Informationsgehalt vom Display und von den Leuchtmitteln in der Regel identisch angezeigt wird, rasch und eindeutig auf Übereinstimmung vergleichbar ist.

Von Vorteil ist weiters, dass die selektive Ansteuerung der Leuchtmittel am Handbediengerät, insbesondere die entsprechende Aktivierung oder Deaktivierung der jeweiligen Leuchtmittel, einfehlersicher ausgeführt wird. Insbesondere kann dadurch erhöhten Zuverlässigkeits- bzw. Funktionsanforderungen entsprochen werden, nachdem die Wahrscheinlichkeit einer falschen Anzeige der geltenden Nothalt-Wirkungsbereiche grundsätzlich Null ist bzw. damit einhergehende Sicherheitsrisiken eliminiert werden oder auf ein Minimum reduziert werden können. Des Weiteren kann es zweckmäßig sein, wenn zur Signalisierung des Wirkungsbereiches oder der Wirkungsbereiche des zumindest einen Nothalt-Betätigungselements eine einfehlersichere Aktivierung jenes Leuchtmittels oder jener Leuchtmittel vorgenommen wird, welches Leuchtmittel jenen Teilbereich des Maschinensteuerungssystems identifiziert bzw. welche Leuchtmittel jene Teilbereiche des Maschinensteuerungssystems identifizieren, für welchen Teilbereich bzw. für welche Teilbereiche das Nothalt-Betätigungselement funktional verfügbar, insbesondere funktionsbereit ist. Dadurch kann der Bedienperson möglichst eindeutig erkennbar gemacht werden, insbesondere klar hervorgehoben bzw. markiert werden, gegenüber welchen "Abschaltbereichen" bzw. Wirkungszonen das Nothalt-Betätigungselement im Bedarfsfall wirksam werden kann.

Ferner ist es vorgesehen, dass zur Signalisierung des Wirkungsbereiches oder der Wirkungsbereiche des zumindest einen Nothalt-Betätigungselements am Display des Handbediengeräts jener Teilbereich des Maschinensteuerungssystems grafisch markiert und/oder farblich hervorgehoben wird bzw. jene Teilbereiche des Maschinensteuerungssystems grafisch markiert und/oder farblich hervorgehoben werden, für welchen Teilbereich bzw. für welche Teilbereiche das Nothalt-Betätigungselement funktional verfügbar ist, d.h. funktionsbereit ist, und/oder dass bei Vorliegen einer Funktionsverfügbarkeit des zumindest einen Nothalt-Betätigungselements am Handbediengerät das diskret ausgebildete Leuchtmittel in oder an dem zumindest einem Nothalt-Betätigungselement aktiviert ist. Demnach ist das Nothalt-Betätigungselement beleuchtet bzw. hinterleuchtet wenn es verfügbar bzw. funktionsbereit ist. Alternativ oder in Kombination dazu können jene Leuchtmittel aktiv sein, welche den funktional verfügbaren Wirkungsbereich oder die funktional verfügbaren Wirkungsbereiche des Nothalt-Betätigungselements am Handbediengerät signalisieren.

Darüber hinaus kann vorgesehen sein, am Display des Handbediengeräts zusätzlich die jeweils geltende Stopp-Kategorie von dem zumindest einen Nothalt-Betätigungselement, also Kategorie 0 für sofortiges Unterbrechen der Energiezufuhr in Bezug auf die zumindest eine Maschinenoperation, oder Kategorie 1 für Stillsetzen von Bewegungen oder Funktionen in Bezug auf die zumindest eine Maschinenoperation und anschließende Unterbrechung der Energiezufuhr angezeigt wird. Dies kann für geschulte Bedienpersonen relevant sein. Insbesondere kann dadurch die jeweilige Funktionalität des Nothalt-Betätigungselements am Handbediengerät von geschulten Bedienpersonen, wie zum Beispiel einem Maschinenprogrammierer, unterschieden werden.

Vorteilhaft ist auch eine Ausprägung, gemäß welcher ein manuell bedienbares und/oder automatisiert arbeitendes Modus-Umschaltmittel vorgesehen ist, mit welchem ein manuell eingeleiteter oder automatisiert ausgeführter Wechsel zwischen einem (i) stationären Betriebsmodus des Handbediengeräts und einem (ii) Maschinenbeeinflussungs-Modus des Handbediengerätes, insbesondere einem sogenannten Teach-Modus, und umgekehrt, vorgenommen wird.

Gemäß einer Weiterbildung ist es möglich, dass das wenigstens eine Nothalt-Betätigungselement am Handbediengerät im (i) stationären Betriebsmodus des Handbediengeräts als Not-Stopp-Funktionselement zur sofortigen Unterbrechung der Energiezufuhr in Bezug auf die zumindest eine Maschinenoperation betrieben oder vorgesehen wird, und dass das wenigstens eine Nothalt-Betätigungselement am Handbediengerät im (ii) Maschinenbeeinflussungs-Modus des Handbediengeräts zum Stillsetzen von Bewegungen oder Funktionen in Bezug auf die zumindest eine Maschinenoperation und zum anschließenden Unterbrechen der Energiezufuhr betrieben oder vorgesehen wird.

Ferner kann es zweckmäßig sein, wenn dem wenigstens einen Nothalt-Betätigungselement im (i) stationären Betriebsmodus des Handbediengeräts durch Aktivierung des zumindest einen Leuchtmittels ein zumindest abschnittsweise rot gefärbtes Erscheinungsbild zugeordnet wird, während im (ii) Maschinenbeeinflussungs-Modus das zumindest eine Leuchtmittel deaktiviert ist. Im Maschinenbeeinflussungs-Modus besitzt das Nothalt-Betätigungselement vorzugsweise keine rot gefärbten Teilabschnitte, sondern weist ein graues oder ein graues und gelbes Erscheinungsbild, insbesondere ein milchig-grau durchscheinendes und gelbes Erscheinungsbild auf. Durch diesen gesteuerten Farbwechsel des Nothalt-Betätigungselements kann dessen jeweils geltende Stopp-Kategorie, insbesondere 0 oder 1, eindeutig kenntlich gemacht werden.

Darüber hinaus kann vorgesehen sein, dass das Modus-Umschaltmittel durch Interaktion von Seiten der Bedienperson gegenüber zumindest einer Schaltfläche am Handbediengerät beeinflusst wird. Dadurch ist eine manuelle, gegebenenfalls durch ein Authorisierungs-Überprüfungsmittel abgesicherte, Umschaltmöglichkeit zwischen den zwei Betriebsmodi geschaffen.

Des Weiteren kann vorgesehen sein, dass das Modus-Umschaltmittel durch Ablegen des Handbediengeräts an einem vordefinierten Ort oder durch vordefinierte Zuordnung und/oder Anbringung gegenüber einer vordefinierten Gegenstelle, z.B. einer Wandhalterung, automatisiert beeinflusst wird. Dadurch ist eine automatische Umschaltung zwischen den beiden Betriebsmodi bzw. eine automatische Aktivierung des stationären Betriebsmodus erzielbar.

Gemäß einer besonderen Ausprägung ist die wenigstens eine Übertragungsschnittstelle des Handbediengeräts drahtlos ausgebildet, wobei die wenigstens eine drahtlose Übertragungsschnittstelle zum drahtlosen Aufbauen oder Umsetzen einer steuerungstechnischen Wirkverbindung zwischen dem Handbediengerät und wenigstens einer der Maschinensteuerungen eingerichtet ist. Gegebenenfalls kann die drahtlose Wirkverbindung auch gegenüber einer dezidierten Anschlussstelle bzw. Anschlussbox von einer der Maschinensteuerungen aufgebaut werden.

Entsprechend einer vorteilhaften Weiterbildung kann vorgesehen sein, dass die jeweils vorliegenden, von einer Bedienperson manuell aktivier- und veränderbaren Betätigungszustände des zumindest einen Nothalt-Betätigungselements über die wenigstens eine drahtlose Übertragungsschnittstelle signaltechnisch übertragen und in den Nothalt-Sicherheitsschaltkreis oder in das Sicherheits-Bussystem der ausgewählten oder aktiv angebundenen Maschinensteuerung eingekoppelt werden, sodass in einem aktiven Betriebszustand des Handbediengeräts das zumindest eine Nothalt-Betätigungselement in funktionaler Hinsicht in den Nothalt-Sicherheitsschaltkreis oder in das Sicherheits-Bussystem der ausgewählten oder aktiv angebundenen Maschinensteuerung einkoppelbar ist.

Insbesondere kann es vorteilhaft sein, wenn das zumindest eine Leuchtmittel am Handbediengerät und/oder das zumindest eine diskret ausgebildete Leuchtmittel in oder an dem zumindest einen Nothalt-Betätigungselement des Handbediengeräts durch ein im Handbediengerät angeordnetes, elektronisches Sicherheitsmodul, beispielsweise in Form einer Sicherheitssteuerung, angesteuert wird.

Ferner kann vorgesehen sein, dass die plangemäße Funktion, insbesondere der Aktiv- und/oder Inaktivzustand, des zumindest einen Leuchtmittels mittels dem Sicherheitsmodul und zumindest einem daran angebundenen Sensor überprüft wird und ein allfälliger Fehlerzustand signalisiert wird. Eine solche Signalisierung kann beispielsweise am Handbediengerät erfolgen und dadurch der Bedienperson unmittelbar zur Kenntnis gebracht werden.

Darüber hinaus kann vorgesehen sein, dass zumindest einzelne oder alle Leuchtmittel durch zumindest eine 7-Segmentanzeige im Umfangs- oder Randbereich des Display und/oder am Nothalt-Betätigungselement gebildet sind.

Die Aufgabe der Erfindung wird auch durch ein Maschinensteuerungssystem gelöst, wie es in den Ansprüchen angegeben ist. Die damit erzielbaren technischen Wirkungen und vorteilhaften Effekte sind den vorhergehenden Beschreibungsteilen und auch den nachstehenden Ausführungen zu entnehmen.

Zum besseren Verständnis der Erfindung wird diese anhand der nachfolgenden Figuren näher erläutert.

Es zeigen jeweils in stark vereinfachter, schematischer Darstellung:
- Fig. 1: ein Schema eines beispielhaften Maschinensteuerungssystems umfassend Maschinen, insbesondere Industrieroboter, welche wahlweise manuell steuerbar sind und auch automatisiert gesteuert werden können;
- Fig. 2: ein tragbares Handbediengerät, welches im Maschinensteuerungssystem nach Fig. 1 eingesetzt werden kann;
- Fig. 3: ein Nothalt-Betätigungselement mit automatisiert aktivier- und deaktivierbarer Beleuchtung oder Hinterleuchtung zur Signalisierung von dessen funktionaler Verfügbarkeit und Nicht-Verfügbarkeit.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

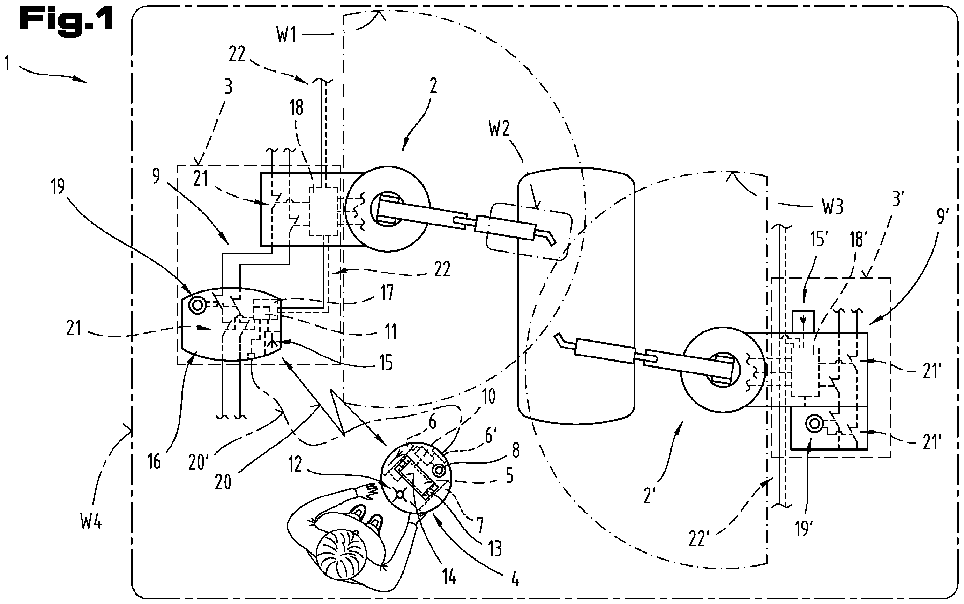

Fig. 1 zeigt ein Ausführungsbeispiel eines Maschinensteuerungssystems 1 zur manuellen, teilautomatischen und vollautomatisierten Ausführung von Produktions- oder Bearbeitungsprozessen. Hierbei sind die entsprechenden Maschinen 2, 2' durch eine Gruppe von Industrierobotern gebildet. Die steuerungstechnisch kontrollierten Maschinen können aber auch durch andere Bearbeitungsmaschinen oder durch Werkzeugmaschinen gebildet sein.

Die entsprechenden Maschinen 2, 2' umfassen jeweils zumindest eine elektronische Maschinensteuerung 3, 3', über welchen die jeweiligen Aktoren bzw. Antriebe der zugeordneten Maschine 2, 2' angesteuert bzw. aktiviert werden können, und welche Maschinensteuerungen 3, 3' mit einer Mehrzahl von Sensoren oder Gebern zur Erfassung bzw. Überwachung der jeweiligen Betriebs- bzw. Maschinenzustände verbunden sind. Die an sich bekannten Maschinensteuerungen 3, 3' sind vorzugsweise programmgesteuert ausgeführt, insbesondere softwaretechnisch betreibbar.

In das Maschinensteuerungssystem 1 ist wenigstens ein mobiles, insbesondere ein von einer Bedienperson tragbares Handbediengerät 4 steuerungstechnisch eingebunden bzw. einbindbar. Das Handbediengerät 4 umfasst zumindest eine elektronische Steuervorrichtung 5, welche selektiv mit den lokalen Maschinensteuerungen 3, 3' in Wechselwirkung versetzbar ist bzw. hierzu kommunikationskompatibel ist. Zur daten- bzw. steuerungstechnischen Kommunikation mit wenigstens einer der lokalen Maschinensteuerungen 3, 3' ist dabei wenigstens eine, beispielsgemäß funktechnisch ausgeführte Übertragungsschnittstelle 6 am Handbediengerät 4 ausgebildet bzw. mit dessen Steuervorrichtung 5 gekoppelt. Das Handbediengerät 4 ist dabei bevorzugt völlig kabellos ausgeführt, also ohne jeglicher Kabelverbindung betreibbar. Zur elektrischen Energieversorgung der elektrotechnischen Komponenten des Handbediengeräts 4 umfasst es wenigstens eine Batterie bzw. wenigstens einen aufladbaren Akkumulator 7.

Alternativ ist es auch möglich, dass das Handbediengerät 4 bzw. dessen wenigstens eine Übertragungsschnittstelle 6' leitungs- bzw. kabelgebunden ausgeführt ist. Wie an sich bekannt, ist dann das Handbediengerät 4 mittels einer Kabelverbindung 20' - in Fig. 1 strichpunktiert veranschaulicht - mit wenigstens einer der Maschinensteuerungen 3, 3' daten- bzw. steuerungstechnisch verbunden bzw. verbindbar. Hierfür können auf Seiten der Maschinensteuerung 3, 3' und/oder auf Seiten des Handbediengeräts 4 an sich bekannte Steckerschnittstellen ausgebildet sein.

Ebenso ist es möglich, eine kombinatorische Anbindung des Handbediengeräts 4 an die Maschinensteuerung 3, 3' vorzusehen. Dabei werden beispielsweise sicherheitsunkritische Daten bzw. Signale mittels der funktechnischen Übertragungsschnittstelle 6 ausgetauscht bzw. übertragen. Vergleichsweise sicherheitskritische Daten bzw. Signale, wie zum Beispiel in Zusammenhang mit einem Nothalt-Betätigungselement 8 am Handbediengerät 4, werden hingegen mittels der kabelgebundenen Übertragungsschnittstelle 6' ausgetauscht bzw. übertragen. Am Handbediengerät 4 ist wenigstens ein Nothalt-Betätigungselement 8 ausgebildet, mit welchem einer Bedienperson eine Abwendung oder unmittelbare Beendigung von potentiell gefahrbringenden Situationen im Zuge von automatisiert oder teilautomatisiert ablaufenden Maschinenoperationen ermöglicht ist. Insbesondere kann durch eine Betätigung bzw. Aktivierung des Nothalt-Betätigungselementes 8 ein sicherer Zustand eingeleitet werden bzw. können dadurch potentiell gefahrbringende Maschinenoperationen unmittelbar und umfassend beendet werden. Das Nothalt-Betätigungselement 8 wirkt dabei auf einen Nothalt-Sicherheitsschaltkreis 9 bzw. 9' der jeweils angesteuerten bzw. angebundenen Maschine 2 bzw. 2' ein. Allenfalls kann das Nothalt-Betätigungselement 8 auch auf das gesamte Maschinensteuerungssystem 1 einwirken. Alternativ oder in Kombination dazu können die jeweiligen Betätigungszustände, insbesondere ein manuell herbeigeführter Aktiv- bzw. Inaktivzustand des zumindest einen Nothalt-Betätigungselements 8 am Handbediengerät 4 auch in ein Sicherheits-Bussystem 22, 22' der jeweiligen Maschinensteuerung 3, 3' respektive der jeweiligen Maschine 2, 2' oder Maschinengruppe eingekoppelt bzw. datentechnisch eingespeist werden, wie dies nachstehend noch beschrieben wird.

Gemäß der vorteilhaften "Wireless-Ausführungsform" des Handbediengeräts 4 ist das Nothalt-Betätigungselement 8 via die wenigstens eine funktechnische Übertragungsschnittstelle 6 am Handbediengerät 4 drahtlos in das Maschinensteuerungssystem 1 eingebunden bzw. funktechnisch mit der jeweils ausgewählten und aktiv angebundenen Maschinensteuerung 3, 3' wirkungsverbunden, insbesondere mit dem jeweiligen Nothalt-Sicherheitsschaltkreis 9, 9' oder dem jeweiligen Sicherheits-Bussystem 22, 22' funktional gekoppelt. Die wirkungstechnische Kopplung zwischen dem Nothalt-Betätigungselement 8 und dem jeweiligen Nothalt-Sicherheitsschaltkreis 9, 9' bzw. Sicherheits-Bussystem 22, 22' erfolgt dabei unter Einhaltung hoher Verfügbarkeitsanforderungen und unter Berücksichtigung hoher Funktionszuverlässigkeit. Hierzu kann im Handbediengerät 4 ein elektronisches Sicherheitsmodul 10 implementiert sein, welches in Zusammenwirken mit einem elektronischen Sicherheits-Auswertemodul 11 auf Seiten der lokalen Maschinensteuerung 3, 3' für eine besonders funktionszuverlässige und hochverfügbare Auswertung und Übertragung der jeweiligen Betätigungszustände des ersten Nothalt-Betätigungselementes 8 am portablen, drahtlos angebundenen Handbediengerät 4 sorgt. Das Nothalt-Betätigungselement 8, welches somit mobil ausgeführt ist bzw. unmittelbar personenzugewiesen ist, ist somit im Bedarfsfall besonders rasch verfügbar bzw. unverzüglich aktivierbar.

Abweichend von der in Fig. 1 dargestellten Ausführungsform bezüglich einer Anbringung des Nothalt-Betätigungselementes 8 am Gehäuse des Handbediengeräts 4 ist es auch möglich, dieses Nothalt-Betätigungselement 8 oder ein zusätzliches Nothalt-Betätigungselement als gesonderte Komponente auszubilden und über eine Kabelverbindung oder eine Funkverbindung mit dem Handbediengerät 4 bzw. mit dessen Steuervorrichtung 5 signaltechnisch zu koppeln. Gleiches kann für einen oder mehrere gegebenenfalls ausgebildete Zustimmtaster gelten. Derartige, baulich separat ausgeführte Komponenten werden aufgrund ihrer handlichen und kompakten Ausgestaltung umgangssprachlich auch als "Zustimm- bzw. Nothalt-Knochen" bezeichnet.

Das Handbediengerät 4 umfasst weiters wenigstens ein Bedienelement 12, beispielsweise einen Joystick, ein Drehsteller-Betätigungselement oder dergleichen, und/oder wenigstens eine Schaltfläche 13 zur manuellen Beeinflussung von Maschinenoperationen durch eine Bedienperson. Insbesondere sind mit dem wenigstens einen Bedienelement 12 bzw. mit der wenigstens einen Schaltfläche 13 von einer Bedienperson potentiell gefahrbringende Maschinenoperationen, beispielsweise Bewegungs-Steuerbefehle, Aktivierungen von Maschinenprozessen und dergleichen ausführ- bzw. einleitbar. Die wenigstens eine Schaltfläche 13 kann dabei als elektrisches Tastschalt- bzw. Schaltelement ausgeführt sein und/oder durch ein berührungssensitiven Abschnitt an einem berührungssensitiven Display 14 des Handbediengeräts 4 gebildet sein.

Um eine steuerungstechnische Wirkverbindung bzw. eine datentechnische Wechselwirkung zwischen dem komplett kabellos ausgeführten, oder für Sicherheitsfunktionen gegebenenfalls auch teilweise kabelgebunden ausgeführten Handbediengerät 4 und einer der Maschinensteuerungen 3, 3' aufbauen zu können, ist an der jeweiligen Maschinensteuerung 3, 3' wenigstens eine kommunikationskompatible, funktechnische Gegenstelle 15, 15' vorgesehen. Beispielsgemäß ist die funktechnische Gegenstelle 15 als baulich eigenständige Anschlussbox 16 mit integrierter Steuerungselektronik 17 ausgeführt, welche Steuerungselektronik 17 mit dem primären Steuerungskern 18 der Maschine 2 bzw. der Maschinensteuerung 3 wirkungs- bzw. leitungsverbunden ist. Die Ausbildung einer baulich eigenständigen Anschlussbox 16 bietet den Vorteil, dass dadurch bestehende Maschinensysteme nachgerüstet werden können bzw. eine optionale Erweiterung auf ein drahtloses Kommunikationssystem zur Verfügung steht.

Die Anschlussbox 16 umfasst vorzugsweise wenigstens ein weiteres Nothalt-Betätigungselement 19 mit welchem potentiell gefahrbringende Maschinenoperationen ebenso umgehend gestoppt werden können bzw. mit welchem für die Bedienperson und auch für sonstige Personen im Umfeld des Maschinensteuerungssystems 1 ein sicherer Zustand eingeleitet bzw. hergestellt werden kann. Hierzu ist das zumindest eine weitere Nothalt-Betätigungselement 19 funktional bzw. signaltechnisch in den Nothalt-Sicherheitsschaltkreis 9 bzw. in das Sicherheits-Bussystem 22 eingebunden, vorzugsweise fest mit dem Nothalt-Sicherheitsschaltkreis 9 verdrahtet. Das vorhergehend beschriebene, in besonders funktionssicherer Technik umgesetzte Sicherheits-Auswertemodul 11 kann in der Anschlussbox 16 implementiert sein, insbesondere als funktionale Komponente der internen Steuerungselektronik 17 ausgeführt sein.

Wie anhand der Maschinensteuerung 3' gezeigt wurde, ist es auch möglich, die funktechnische Gegenstelle 15' als integrale bzw. unmittelbar zugeordnete Komponente des Steuerungskerns 18' auszuführen. Ebenso ist es möglich, dass das zumindest eine weitere Nothalt-Betätigungselement 19' im Umfeld der Maschine 2' direkt in den Nothalt-Sicherheitsschaltkreis 9' der Maschinensteuerung 3' eingebunden ist, insbesondere unmittelbar mit dem Nothalt-Sicherheitsschaltkreis 9' verdrahtet ist. Alternativ ist auch eine signal- bzw. datentechnische Einbindung in das Sicherheits-Bussystem 22' möglich. Analoges kann für das Nothalt-Betätigungselement 19 an der Anschlussbox 16 und den Nothalt-Sicherheitsschaltkreis 9 der Maschinensteuerung 3 vorgesehen sein.

Die jeweils vorliegenden, von einer Bedienperson manuell auswähl- bzw. herbeiführbaren, insbesondere bedarfsweise aktivierbaren Betätigungszustände des ersten Nothalt-Betätigungselementes 8 am Handbediengerät 4 werden über die wenigstens eine funktechnische oder kabelgebundene Daten- bzw. Übertragungsschnittstelle 6, 6' signaltechnisch übertragen und zustandsäquivalent in den Nothalt-Sicherheitsschaltkreis 9 oder in das Sicherheits-Bussystem 22 der ausgewählten bzw. funktional angebundenen Maschinensteuerung 3 eingekoppelt. Demnach wird in einem Betriebszustand des Handbediengeräts 4 das zumindest eine Nothalt-Betätigungselement 8 am Handbediengerät 4 in funktionaler Hinsicht in den Nothalt-Sicherheitsschalkreis 9 bzw. in das Sicherheits-Bussystem 22 der ausgewählten bzw. funktional angebundenen Maschinensteuerung 3 eingekoppelt. Analoge Zustände gelten für jenen Fall, bei welchem das Handbediengerät 4 mit der Maschinensteuerung 3' wirkungsverbunden bzw. funktional gekoppelt ist. Insbesondere kann das Handbediengerät 4 wahlweise mit der Maschinensteuerung 3 oder mit der Maschinensteuerung 3' signaltechnisch gekoppelt werden. Dies hängt von den steuerungstechnischen Erfordernissen bzw. Wünschen der Bedienperson ab. Im dargestellten Ausführungsbeispiel gemäß Fig. 1 ist das Handbediengerät 4 mit der Maschinensteuerung 3 funktional gekoppelt, was anhand einer durch einen Doppelpfeil dargestellten, funktechnischen Wirkverbindung 20 beispielhaft ersichtlich ist. Demzufolge kann von der Bedienperson im Bedarfsfall ein Nothalt in Bezug auf die Maschinensteuerung 3 bzw. in Bezug auf die davon kontrollierten Maschinenoperationen eingeleitet werden. Hierfür betätigt die Bedienperson das Nothalt-Betätigungselement 8 am Handbediengerät 4 oder das wenigstens eine weitere Nothalt-Betätigungselement 19 im Umfeld bzw. Nahbereich der angesteuerten Maschine 2.

Ein manuell eingeleiteter Aktiv- oder Betätigungszustand des Nothalt-Betätigungselementes 8 kann dabei durch wenigstens einen elektrisch unterbrochenen bzw. offenen Öffner-Kontakt 21, 21' in dem wenigstens einkreisig, vorzugsweise zweikreisig, ausgeführten Nothalt-Sicherheitsschaltkreis 9 bzw. 9' der ausgewählten Maschinensteuerung 3 bzw. 3' repräsentiert sein. Demgegenüber kann ein Inaktiv- oder Bereitschaftszustand, insbesondere ein Inaktiv-Schaltzustand des Nothalt-Betätigungselementes 8 dadurch repräsentiert sein, dass der wenigstens eine Öffner-Kontakt 21, 21' in dem wenigstens einkreisig, vorzugsweise zweikreisig, ausgeführten Nothalt-Sicherheitsschaltkreis 9 bzw. 9' der ausgewählten Maschinensteuerung 3 bzw. 3' elektrisch geschlossenen ist.

Anstelle der vorhergehend beschriebenen, diskret aufgebauten Nothalt-Sicherheitsschaltkreise 9, 9', welche ein- oder mehrkanalige Verdrahtungen bzw. Leitungsführungen umfassen, ist es gemäß den vorhergehenden Darlegungen auch möglich, wenigstens ein Sicherheits-Bussystem 22, 22' vorzusehen, in welches die jeweiligen Betätigungszustände des Nothalt-Betätigungselements 8 datentechnisch einkoppelbar sind bzw. eingekoppelt werden. Das in Fig. 1 durch parallel geführte Volllinien und strichlierte Linien symbolisierte Sicherheits-Bussystem 22, 22' kann dabei als spezielles bzw. hochzuverlässiges Sicherheits-Busprotokoll umgesetzt sein, welches auf dem funktionalen bzw. steuerungstechnisch relevanten Datennetzwerk des Maschinensteuerungssystems 1 bzw. der Maschinensteuerungen 3, 3' übertragen bzw. ausgeführt wird. Beispielsweise kann dieses Sicherheits-Busprotokoll gemäß dem FSoE-Standard, gemäß PROFIsafe, gemäß SafetyBUS oder gemäß SafetyNET umgesetzt sein - allfällige Markenrechte verbleiben selbstverständlich bei den jeweiligen Markeninhabern. Typischerweise ist also nur ein einziges, physisches Steuerungsnetzwerk vorhanden, auf welchem sowohl die steuerungsrelevanten als auch die sicherheitsrelevanten Daten, wie beispielsweise die Betätigungszustände des zumindest einen Nothalt-Betätigungselements 8, übertragen bzw. ausgetauscht werden. Das jeweilige Sicherheits-Bussystem 22, 22' kann also durch ein besonders fehlersicheres bzw. hochverfügbares Busprotokoll in das standardmäßige bzw. steuerungstechnisch relevante Bussystem bzw. Steuerungsnetzwerk, insbesondere in den sogenannten Feldbus der Maschinensteuerung 3, 3' integriert sein. Alternativ dazu kann das Sicherheits-Bussystem 22, 22' auch als physisch eigenständiges Daten- bzw. Steuerungsnetzwerk ausgeführt sein. Um die Zuverlässigkeit bzw. Funktionsverfügbarkeit des Sicherheits-Bussystems 22, 22' zu erhöhen, kann dieses auch in Ring-Topologie ausgeführt sein.

Vor allem aufgrund der baulichen Komplexität bzw. aufgrund der teilweise schwierigen Überschaubarkeit von verketteten oder auch separat angeordneten, nahe benachbarten Maschinen 2, 2' ist es für Bedienpersonen fallweise schwierig, die steuerungstechnische Zuordnung des Handbediengeräts 4 zur jeweiligen Maschine 2, 2' bzw. zur jeweiligen Maschinensteuerung 3, 3' rasch und eindeutig, insbesondere möglichst fehlerfrei, zu erkennen bzw. in Erinnerung zu behalten. Diese Umstände können vor allem in Zusammenhang mit einer plötzlich eintretenden Gefahrensituation kritisch sein. In solchen Gefahrensituationen soll von der Bedienperson möglichst rasch auf das Nothalt-Betätigungselement 8 am mobilen bzw. positionsveränderlichen Handbediengerät 4 zugegriffen werden können und dadurch die jeweilige Gefahrensituation abgewendet bzw. die potentiell gefahrbringende Maschinenoperation unmittelbar bzw. rechtzeitig gestoppt werden können. Speziell bei völlig kabellos kommunizierenden bzw. bei steuerungstechnisch kabellos angebundenen Handbediengeräten 4 ist die jeweilige, potentiell aktive Zuordnung zu einer Maschinensteuerung 3, 3' häufig nicht augenscheinlich erkennbar bzw. von Seiten der Bedienperson unter Umständen nicht mehr in genauer Erinnerung. Damit einhergehend ist aber auch die Wirksamkeit des Nothalt-Betätigungselements 8 am Handbediengerät 4 in Bezug auf die jeweilige Maschinensteuerung 3, 3' bzw. in Bezug auf den jeweiligen Sicherheitsschaltkreis 9, 9' entweder gegeben oder nicht gegeben. Insbesondere können sich durch die bedarfsabhängige Anbindbarkeit des tragbaren bzw. mobilen Handbediengeräts 4 an unterschiedliche Maschinensteuerungen 3, 3' bzw. durch die Ausbildung von zumindest zwei voneinander unabhängigen Nothalt-Sicherheitsschaltkreisen 9, 9' oder Sicherheits-Bussystemen 22, 22' unterschiedliche Wirkungsbereiche W1-W4 des Nothalt-Betätigungselements 8 am Handbediengerät 4 einstellen. Aber auch innerhalb einer Maschine 2, 2' bzw. innerhalb von dessen Maschinensteuerungssystem 3, 3' können unterschiedliche, das heißt voneinander separierte Nothalt-Sicherheitsschaltkreise vorgesehen sein, welche zur sicheren Abschaltung bzw. zur Herbeiführung eines sicheren Zustandes von dezidierten Teilabschnitten der Maschine 2, 2' vorgesehen sind.

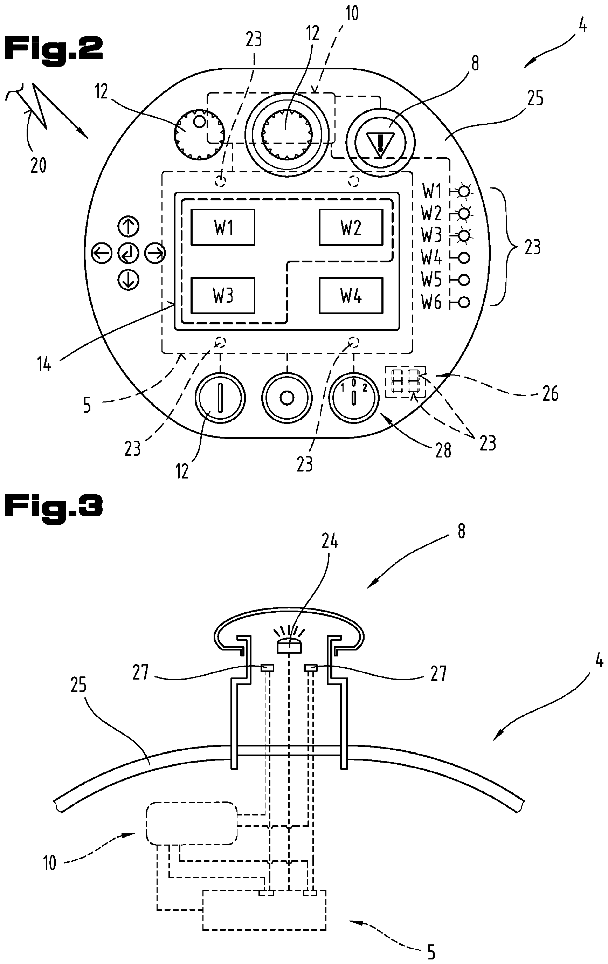

Die vorhergehend beschriebenen Problemsituationen in Verbindung mit einer ungewissen oder sogar irrtümlichen bzw. fehlerhaft angenommen Zuordnung des Nothalt-Betätigungselements 8 sind zu vermeiden bzw. bestmöglich hintan zu halten. In diesem Zusammenhang ist das Maschinensteuerungssystem 1 bzw. sind die Maschinensteuerungen 3, 3' und/oder die Steuerungselektronik 17 des Handbediengeräts 4 dazu eingerichtet, ein zumindest schematisches Abbild des Maschinensteuerungssystems 1 oder von Teilbereichen des Maschinensteuerungssystems 1 am Display 14 des Handbediengeräts 4 anzuzeigen, wie dies in Fig. 2 beispielhaft gezeigt ist. Unter einem Teilbereich des Maschinensteuerungssystems 1 sind dabei eine einzelne Maschine 2 oder 2', eine Maschinengruppe 2 und 2', oder Teilkomponenten bzw. Abschnitte einer einzelnen Maschine 2, 2' bzw. Maschinengruppe 2 und 2' zu verstehen. Die entsprechende Abbildung des Maschinensteuerungssystems 1 oder von Teilbereichen des Maschinensteuerungssystems 1 auf dem vorzugsweise grafikfähigen Display 14 des Handbediengeräts 4 kann dabei sehr schemenhaft bzw. abstrakt bis hin zu fotorealistisch ausgeführt sein.

Zudem ist das Maschinensteuerungssystem 1 bzw. sind die Maschinensteuerungen 3, 3' und/oder die Steuerungselektronik 17 und/oder die Steuervorrichtung 5 des Handbediengeräts 4 dazu eingerichtet, zumindest ein schematisches Abbild des effektiven Wirkungsbereiches oder der effektiven Wirkungsbereiche W1, W2, W3, W4 des zumindest einen Nothalt-Betätigungselements 8 am Handbediengerät 4 mittels dem Display 14 des Handbediengeräts 4 anzuzeigen. Darüber hinaus ist zumindest eine der genannten Komponenten dazu eingerichtet, eine selektive, vorzugsweise technisch einfehlersicher ausgeführte Ansteuerung von zumindest einem Leuchtmittel 23 am Handbediengerät 4 - Fig. 2 - und/oder von zumindest einem diskret ausgebildeten Leuchtmittel 24 in oder an dem zumindest einen Nothalt-Betätigungselement 8 am Handbediengerät 4 - Fig. 3 - auszuführen. Unter Ansteuerung ist dabei die Aktivierung des jeweiligen bzw. der jeweiligen Leuchtmittel 23 und/oder 24 zu verstehen. Durch eine solche Aktivierung leuchtet das jeweilige Leuchtmittel 23 bzw. 24 und ist dadurch von der Bedienperson visuell als eingeschaltet bzw. als aktiviert erkennbar. Die vorzugsweise technisch einfehlersicher umgesetzte Ansteuerung des zumindest einen Leuchtmittels 23; 24 kann dabei die Zustands- bzw. Ist-Situations-Ermittlung und/oder die Signalübertragung und/oder die Anzeige bzw. Signalisierung des jeweiligen Wirkungsbereiches W1-W4 in einfehlersicherer Technik umfassen. Diese vorzugsweise einfehlersicher ausgeführte Ansteuerung kann dabei durch an sich bekannte software- und/oder hardwaretechnische Maßnahmen erzielt werden, und führt letztendlich dazu, dass ein einzelner Fehler nicht zum Verlust von Sicherheitsfunktionen führt bzw. nicht zu potentiell gefahrbringenden Irrtümern oder Zuständen führt. Die Ansteuerung, insbesondere die Aktivierung und Deaktivierung des bzw. der jeweiligen Leuchtmittel 23 und/oder 24 ist also bevorzugt in sicherer Technik ausgeführt und somit hinsichtlich der jeweiligen Aussagekraft über den bzw. die Wirkungsbereiche W1-W4 des Nothalt-Betätigungselements 8 besonders zuverlässig bzw. fehlersicher umgesetzt.

Entsprechend dem Ausführungsbeispiel nach Fig. 2 können die einzelnen, beispielsgemäß diskret Leuchtmittel 23, welche jeweils einem Wirkungsbereich W1, W2, W3 oder W4 bzw. Zonen oder Gruppen von Wirkungsbereichen W1-W3; W2-W4 oder W1-W4 und dergleichen, zugeordnet sein können, in einem Randbereich des Displays 14 angeordnet sein. Alternativ ist es auch möglich, dass die diskret ausgebildeten Leuchtmittel 23 zu den am Display 14 grafisch darstellbaren bzw. dargestellten Wirkungsbereichen W1-W4 positionsmäßig nächstliegend angeordnet bzw. örtlich eindeutig zugeordnet sind, wie dies in Fig. 2 mit strichlierten Linien beispielhaft angedeutet wurde.

Demnach wird zur Signalisierung des Wirkungsbereiches W1, W2, W3 bzw. W4 bzw. zur Signalisierung der Wirkungsbereiche W1-Wn des zumindest einen Nothalt-Betätigungselements 8 eine einfehlersichere Aktivierung jenes Leuchtmittels 23; 24 oder jener Leuchtmittel 23; 24 vorgenommen, welches Leuchtmittel 23; 24 jenem Teilbereich des Maschinensteuerungssystems 1 zugordnet ist bzw. welche Leuchtmittel 23; 24 jenen Teilbereichen des Maschinensteuerungssystems 1 zugeordnet sind, für welchen Teilbereich bzw. für welche Teilbereiche das Nothalt-Betätigungselement 8 funktional verfügbar, insbesondere funktionsbereit ist. Insbesondere kann dadurch möglichst eindeutig erkennbar gemacht werden, insbesondere hervorgehoben bzw. für die Bedienperson klar markiert werden, für welchen bzw. für welche der grundsätzlich verfügbaren "Abschaltbereiche" bzw. Abschaltzonen das zumindest eine Nothalt-Betätigungselement 8 am Handbediengerät 4 verfügbar ist und im Bedarfsfall funktionswirksam aktiviert werden kann. Dies kann für den Fall mehrerer Leuchtmittel 23 am Rand bzw. Umfangsbereich des Display 14 und der damit einhergehenden klaren Zuordnung zu Teilbereichen der Anlage bzw. der Maschinensteuerung 1 relativ eindeutig und unmissverständlich umgesetzt werden. Aber auch durch Zuordnungs-Kennzeichnungen, wie z.B. Wl-Wn, welche am Handbediengerät 4 bzw. nahe zu den jeweiligen Leuchtmitteln 23 ausgeführt sind, kann eine eindeutige und für die Bedienperson unmissverständliche Zuordnung geschaffen werden.

Erfindungsgemäß ist zur Signalisierung des Wirkungsbereiches W1, W2, W3 oder W4 oder der Wirkungsbereiche W1-Wn des zumindest einen Nothalt-Betätigungselements 8 am Display 14 des Handbediengeräts 4 jener Teilbereich des Maschinensteuerungssystems 1 grafisch markiert und/oder farblich hervorgehoben bzw. sind jene Teilbereiche des Maschinensteuerungssystems 1 grafisch markiert und/oder farblich hervorgehoben für welchen Teilbereich bzw. für welche Teilbereiche das Nothalt-Betätigungselement 8 funktional verfügbar, insbesondere funktionsbereit ist. Alternativ oder in Kombination dazu kann bei Vorliegen einer Funktionsverfügbarkeit des zumindest einen Nothalt-Betätigungselements 8 am Handbediengerät 4 das diskret ausgebildete Leuchtmittel 24 in oder an dem zumindest einem Nothalt-Betätigungselement 8 steuerungstechnisch aktiviert werden bzw. aktiviert sein. Demnach ist das Nothalt-Betätigungselement 8 automatisch beleuchtet bzw. dessen Leuchtmittel 24 automatisiert aktiviert, wenn das Nothalt-Betätigungselement 8 am Handbediengerät 4 tatsächlich verfügbar bzw. mit höchster Zuverlässigkeit funktionsbereit ist.

Die jeweiligen Leuchtmittel 23; 24 können durch diskret ausgebildete, am Gehäuse 25 des Handbediengeräts 4 positionierte LED definiert sein. Alternativ oder in Kombination dazu ist es auch möglich, zumindest einzelne oder alle Leuchtmittel 23 durch zumindest eine 7-Segmentanzeige 26 zur Nummernanzeige im Umfangs- oder Randbereich des Display 14 zu positionieren - siehe beispielsweise die Darstellung in strichlierten Linien in Fig. 2 - und/oder zumindest eine 7-Segmentanzeige 26 zur Nummernanzeige am Nothalt-Betätigungselement 8 auszubilden.

Die vorzugsweise grafische, für eine Bedienperson klar erkennbare Markierung des jeweiligen Wirkungsbereiches bzw. der jeweiligen Wirkungsbereiche W1-Wn des Nothalt-Betätigungselements 8 kann durch symbolische und/oder farbliche Markierungen am bzw. im Abbild des Maschinensteuerungssystems 1 erreicht werden. Beispielsweise kann eine farbliche, insbesondere rote, Umrandung um jene Wirkungsbereiche W1-Wn vorgesehen sein, für welche das Nothalt-Betätigungselement 8 funktional verfügbar ist. Ebenso kann am Display 14 des Handbediengeräts 4 eine farbliche Unterscheidung zwischen wirksam zugeordneten Wirkungsbereichen W1-Wn und unwirksamen, d.h. nicht zugeordneten, Wirkungsbereichen W1-Wn vorgesehen sein.

Entsprechend dem Beispiel nach Fig. 2 ist das Nothalt-Betätigungselement 8 des Handbediengeräts 4 den Wirkungsbereichen W1, W2 und W3 zugeordnet bzw. aktuell für diese Wirkungsbereiche funktional verfügbar. Demzufolge ist eine beispielsweise rotfarbene Umrandung um die Zonen W1-W3 vorgesehen und die drei diskret ausgebildeten Leuchtmittel 23 mit den Kennzeichnung W1, W2 und W3 leuchten auf. Das Leuchtmittel 23 für den aktuell nicht zugeordneten Wirkungsbereich W4 leuchtet hingegen nicht auf. Das Leuchtmittel 23 mit der Beschriftung W5 kann für eine andere Gruppe von Wirkungsbereichen vorgesehen sein. Beispielsweise das Leuchtmittel 23 mit der Beschriftung W6 kann aktiviert sein, wenn das Nothalt-Betätigungselement 8 sämtlichen Wirkungsbereichen W1-W4 innerhalb des am Display 14 dargestellten Maschinensteuerungssystems 1 funktional zugeordnet ist. Alternativ dazu können in diesem Fall auch die Leuchtmittel 23 mit den Beschriftungen W1, W2, W3 und W4 aktiv sein. Die jeweilige grafische Darstellungsart und auch die jeweilige Leuchtmittel-basierte Darstellungsart am Handbediengerät 4 sind dabei so gewählt, dass für die Bedienperson eine rasch eruierbare und möglichst eindeutige Wirkbereichs-Feststellung ermöglicht ist. Dies kann durch eine Mehrzahl von Darstellungsarten auf dem Display 14 kombiniert mit adäquaten Signalisierungen mittels der Leuchtmittel 23; 24 am Gehäuse 25 des Handbediengeräts 4 erreicht werden.

Entsprechend einer zweckmäßigen Maßnahme kann das zumindest eine Leuchtmittel 23 am Handbediengerät 4 und/oder das zumindest eine diskret ausgebildete Leuchtmittel 24 in oder an dem zumindest einen Nothalt-Betätigungselement 8 des Handbediengeräts 4 durch das im Handbediengerät 4 angeordnete, elektronische Sicherheitsmodul 10 angesteuert sein. Entweder das Sicherheitsmodul 10 im Handbediengerät 4 per se, oder aber in Kombination mit dem zumindest einen externen Sicherheits-Auswertemodul 11 - Fig. 1 -, kann dabei als sogenannte Sicherheitssteuerung zur Erfüllung erhöhter Zuverlässigkeits- bzw. Sicherheitsanforderungen ausgeführt sein.

In Zusammenhang mit erhöhter Funktionssicherheit bzw. Funktionszuverlässigkeit kann auch vorgesehen sein, dass die plangemäße Funktion, insbesondere der Leuchtzustand und/oder der Inaktivzustand des zumindest einen Leuchtmittels 23; 24 mittels dem Sicherheitsmodul 10 und zumindest einem daran angebundenen Sensor 27 überprüft wird, wobei ein allfälliger Fehlerzustand bzw. eine auswertungstechnische Diskrepanz beispielsweise am Handbediengerät 4 signalisiert wird. Dadurch kann zumindest die Bedienperson auf einen unplausiblen Zustand bzw. auf einen allfälligen technischen Störfall hingewiesen werden. Der zumindest eine Sensor 27, mit welchem die Funktionstüchtigkeit des zumindest einen Leuchtmittels 23; 24 bzw. die Korrektheit von dessen Ansteuerungszustand (ein / aus) evaluierbar ist, kann beispielsweise durch wenigstens einen Sensor zur Messung der Stromaufnahme und/oder durch wenigstens einen Sensor zur Helligkeitsmessung gebildet sein. Eine auswertungstechnische Einfehlersicherheit kann - wie in Fig. 3 veranschaulicht - durch sogenannten Kreuzvergleich zwischen dem Sicherheitsmodul 10 und der funktionalen Steuervorrichtung 5 des Handbediengeräts 4 erzielt werden und/oder durch Auswertung mittels zweier Prozessoren bzw. Schaltungsanordnungen und zweier Auswertungsroutinen bewerkstelligt werden.

Gemäß einer möglichen Ausführungsform kann am Display 14 des Handbediengeräts 4 auch die jeweils geltende Stopp-Kategorie von dem zumindest einen Nothalt-Betätigungselement 8 angezeigt werden. Beispielsweise kann das Nothalt-Betätigungselement 8 der Kategorie 0 für ein sofortiges Unterbrechen der Energiezufuhr in Bezug auf die zumindest eine Maschinenoperation zugewiesen sein, oder der Kategorie 1 für ein Stillsetzen von Bewegungen oder Funktionen in Bezug auf die zumindest eine Maschinenoperation und für eine anschließende Unterbrechung der Energiezufuhr angehören. Die jeweilige Stopp-Kategorie 0 oder 1 kann dabei in Abhängigkeit von Verwendungszuständen des Handbediengeräts 4 bzw. in Abhängigkeit von Betriebszuständen der jeweiligen Maschinensteuerung 3, 3' wechseln bzw. verändert werden, wie diese nachstehend erläutert wird.

Insbesondere kann ein manuell bedienbares und/oder automatisiert arbeitendes Modus-Umschaltmittel 28, beispielsweise ein Schlüsselschalter oder ein Benutzer-Authorisierungsmittel vorgesehen ist, mit welchem ein manuell eingeleiteter oder ein automatisiert ausgeführter Wechsel zwischen einem (i) stationären Betriebsmodus des Handbediengeräts 4 und einem (ii) Maschinenbeeinflussung-Modus, insbesondere einem sogenannten Teach-Modus, des Handbediengeräts 4, und umgekehrt, vorgenommen werden kann. Das Modus-Umschaltmittel 28 kann anstelle eines Schlüsselschalters auch eine Interaktion mit einem softwaretechnisch umgesetzten Authorisierungsmittel, beispielsweise eine PIN-Eingabe, oder das Einlesen eines sonstigen Berechtigungsmittels umfassen. Insbesondere kann das Modus-Umschaltmittel 28 durch Interaktion von Seiten der Bedienperson gegenüber zumindest einer Schaltfläche am Handbediengerät 4 beeinflusst sein.

Entsprechend einer Ausführungsform kann das wenigstens eine Nothalt-Betätigungselement 8 am Handbediengerät 4 im (i) stationären Betriebsmodus des Handbediengeräts 4 als Not-Stopp-Funktionselement zur sofortigen Unterbrechung der Energiezufuhr in Bezug auf die zumindest eine Maschinenoperation betrieben oder vorgesehen sein. Demgegenüber kann das wenigstens eine Nothalt-Betätigungselement 8 am Handbediengerät 4 im (ii) Maschinenbeeinflussung-Modus des Handbediengeräts 4 zum Stillsetzen von Bewegungen oder Funktionen in Bezug auf die zumindest eine Maschinenoperation und zum anschließenden Unterbrechen der Energiezufuhr betrieben oder vorgesehen sein.

Entsprechend einer weiteren Maßnahme kann dem wenigstens einen Nothalt-Betätigungselement 8 im (i) stationären Betriebsmodus des Handbediengeräts 4 durch eine Aktivierung des zumindest einen Leuchtmittels 24 - Fig. 3 - ein zumindest abschnittsweise rot gefärbtes Erscheinungsbild zugeordnet werden, während im (ii) Maschinenbeeinflussungs- bzw. Teach-Modus das zumindest eine Leuchtmittel 24 deaktiviert sein kann. Im Maschinenbeeinflussungs- bzw. Teach-Modus, welcher bevorzugt nur geschulten Bedienpersonen vorbehalten ist, besitzt das Nothalt-Betätigungselement 8 vorzugsweise keine rot gefärbten Teilabschnitte. In diesem Modus kann das Nothalt-Betätigungselement 8 ein überwiegend graues Erscheinungsbild oder ein kombiniertes graues und gelbes Erscheinungsbild aufweisen. Insbesondere kann das Nothalt-Betätigungselement 8 im zweiten Betriebsmodus ein milchig-grau durchscheinendes und gelb gekennzeichnetes Erscheinungsbild aufweisen.

Entsprechend einer zumindest teilautomatisierten bzw. auch vollautomatisierten Ausführungsform kann auch vorgesehen sein, dass das Modus-Umschaltmittel durch Ablegen des Handbediengeräts 4 an einem vordefinierten Ort oder durch eine vordefinierte Zuordnung und/oder Anbringung gegenüber einer vordefinierten Gegenstelle; wie z.B. einer Wandhalterung, automatisiert beeinflusst wird bzw. teil- oder vollautomatisch zwischen den beiden Betriebsmodi (i) und (ii) - und umgekehrt - umgeschaltet wird.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

### Bezugszeichenaufstellung

- 1: Maschinensteuerungssystem
- 2, 2': Maschine, Industrieroboter
- 3, 3': Maschinensteuerung
- 4: Handbediengerät
- 5: Steuervorrichtung des Handbediengerätes
- 6, 6': Übertragungsschnittstelle
- 7: Akkumulator
- 8: Nothalt-Betätigungselement
- 9, 9': Nothalt-Sicherheitsschaltkreis
- 10: Sicherheitsmodul
- 11: Sicherheits-Auswertemodul
- 12: Bedienelement
- 13: Schaltfläche
- 14: Display
- 15, 15': funktechnische Gegenstelle
- 16: Anschlussbox
- 17: Steuerungselektronik
- 18, 18': Steuerungskern
- 19, 19': weiteres Nothalt-Betätigungselement
- 20: funktechnische Wirkverbindung
- 20': Kabelverbindung
- 21, 21': Öffner-Kontakt
- 22, 22': Sicherheits-Bussystem
- 23: Leuchtmittel
- 24: Leuchtmittel
- 25: Gehäuse
- 26: 7-Segmentanzeige
- 27: Sensor
- 28: Modus-Umschaltmittel
- W1-W4: Nothalt-Wirkungsbereiche

## Patentansprüche

1. Verfahren zum Betreiben eines Maschinensteuerungssystems (1) mit wenigstens einer Maschinensteuerung (3, 3') zur Ausführung von Maschinenoperationen,
mit wenigstens einer Maschine (2, 2'), welche von der wenigstens einen Maschinensteuerung (3, 3') steuerungstechnisch kontrolliert wird, und
mit wenigstens einem mobilen, von einer Bedienperson tragbaren Handbediengerät (4) zur funktionalen Beeinflussung von wenigstens einer der Maschinensteuerungen (3, 3'),
welches Handbediengerät (4) wenigstens ein Bedienelement (12) zur manuellen Beeinflussung von Maschinenoperationen und wenigstens eine Benutzerschnittstelle mit einem Display (14) zur Beobachtung oder Kontrolle der Maschincnopcrationcn durch eine Bedienperson aufweist, und
welches Handbediengerät (4) zumindest ein Nothalt-Betätigungselement (8) zur Beendigung von potentiell gefahrbringenden Maschinenoperationen umfasst, wobei die jeweils vorliegenden, von einer Bedienperson manuell aktivier- und veränderbaren Betätigungszustände des zumindest einen Nothalt-Betätigungselements (8) über wenigstens eine Übertragungsschnittstelle (6, 6') in einen Nothalt-Sicherheitsschaltkreis (9, 9') oder in ein Sicherheits-Bussystem (22, 22') der ausgewählten oder aktiv angebundenen Maschinensteuerung (3, 3') eingekoppelt werden,
**gekennzeichnet, durch**
- schematisches bzw. abstraktes bis hin zu fotorealistischem Abbilden des Maschinensteuerungssystems (1) oder von Teilbereichen des Maschinensteuerungssystems (1) auf dem Display (14) des Handbediengeräts (4);
- schematisches Abbilden des Wirkungsbereiches oder der Wirkungsbereiche (W1, W2, W3, W4) von dem zumindest einen Nothalt-Betätigungselement (8) am Handbediengerät (4) mittels dem Display (14) des Handbediengeräts (4) und zudem mittels selektiver, einfehlersicherer Ansteuerung von zumindest einem Leuchtmittel (23) am Handbediengerät (4) und/oder von zumindest einem diskret ausgebildeten Leuchtmittel (24) in oder an dem zumindest einen Nothalt-Betätigungselement (8) am Handbediengerät (4),
- wobei zur Signalisierung des Wirkungsbereiches oder der Wirkungsbereiche (W1, W2, W3, W4) des zumindest einen Nothalt-Betätigungselements (8) am Display (14) des Handbediengeräts (4) jener schematisch abgebildete Teilbereich des Maschinensteuerungssystems grafisch markiert und/oder farblich hervorgehoben wird bzw. jene schematisch abgebildeten Teilbereiche des Maschinensteuerungssystems grafisch markiert und/oder farblich hervorgehoben werden, für welchen Teilbereich bzw. für welche Teilbereiche das Nothalt-Betätigungselement (8) funktional verfügbar ist.

2. Verfahren nach Anspruch 1, **dadurch gekennzeichnet, dass** zur Signalisierung des Wirkungsbereiches oder der Wirkungsbereiche (W1, W2, W3, W4) des zumindest einen Nothalt-Betätigungselements (8) eine einfehlersichere Aktivierung jenes Leuchtmittels oder jener Leuchtmittel (23) vorgenommen wird, welches Leuchtmittel jenen Teilbereich des Maschinensteuerungssystems (1) identifiziert bzw. welche Leuchtmittel (23) jene Teilbereiche des Maschinensteuerungssystems identifizieren, für welchen Teilbereich bzw. für welche Teilbereiche das Nothalt-Betätigungselement (8) funktional verfügbar ist.

3. Verfahren nach Anspruch 1 oder 2, **dadurch gekennzeichnet, dass** bei Vorliegen einer Funktionsverfügbarkeit des zumindest einen Nothalt-Betätigungselements (8) am Handbediengerät (4) das diskret ausgebildete Leuchtmittel (24) in oder an dem zumindest einem Nothalt-Betätigungselement (8) aktiviert ist.

4. Verfahren nach einem der vorhergehenden Ansprüche, **dadurch gekennzeichnet, dass** am Display (14) des Handbediengeräts (4) zusätzlich die jeweils geltende Stopp-Kategorie von dem zumindest einen Nothalt-Betätigungselement (8), also Kategorie 0 für sofortiges Unterbrechen der Energiezufuhr in Bezug auf die zumindest eine Maschinenoperation, oder Kategorie 1 für Stillsetzen von Bewegungen oder Funktionen in Bezug auf die zumindest eine Maschinenoperation und anschließende Unterbrechung der Energiezufuhr, angezeigt wird.

5. Verfahren nach einem der vorhergehenden Ansprüche, **dadurch gekennzeichnet, dass** ein manuell bcdicnbarcs und/oder automatisiert arbeitendes Modus-Umschaltmittcl (28) vorgesehen ist, mit welchem ein manuell eingeleiteter oder automatisiert ausgeführter Wechsel zwischen einem (i) stationären Betriebsmodus des Handbediengeräts (4) und einem (ii) Maschinenbeeinflussungs-Modus des Handbediengeräts (4), und umgekehrt, vorgenommen wird.

6. Verfahren nach Anspruch 5, **dadurch gekennzeichnet, dass** das wenigstens eine Nothalt-Betätigungselement (8) am Handbediengerät (4) im (i) stationären Betriebsmodus des Handbediengeräts (4) als Not-Stopp-Funktionselement zur sofortigen Unterbrechung der Energiezufuhr in Bezug auf die zumindest eine Maschinenoperation betrieben oder vorgesehen wird, und dass das wenigstens eine Nothalt-Betätigungselement (8) am Handbediengerät (4) im (ii) Maschinenbeeinflussungs-Modus des Handbediengeräts (4) zum Stillsetzen von Bewegungen oder Funktionen in Bezug auf die zumindest eine Maschinenoperation und zum anschließenden Unterbrechen der Energiezufuhr betrieben oder vorgesehen wird.

7. Verfahren nach Anspruch 5 oder 6, **dadurch gekennzeichnet, dass** dem wenigstens einen Nothalt-Betätigungselement (8) im (i) stationären Betriebsmodus des Handbediengeräts (4) durch Aktivierung des zumindest einen Leuchtmittels (24) ein zumindest abschnittsweise rot gefärbtes Erscheinungsbild zugeordnet wird, während im (ii) Maschinenbeeinflussungs-Modus das zumindest eine Leuchtmittel (24) deaktiviert ist.

8. Verfahren nach einem der Ansprüche 5 bis 7, **dadurch gekennzeichnet, dass** das Modus-Umschaltmittel (28) durch Interaktion von Seiten der Bedienperson gegenüber zumindest einer Schaltfläche am Handbediengerät (4) beeinflusst wird.

9. Verfahren nach einem der Ansprüche 5 bis 6, **dadurch gekennzeichnet, dass** das Modus-Umschaltmittel (28) durch Ablegen des Handbediengeräts (4) an einem vordefinierten Ort oder durch vordefinierte Zuordnung und/oder Anbringung gegenüber einer vordefinierten Gegenstelle automatisiert beeinflusst wird.

10. Verfahren nach einem der vorhergehenden Ansprüche, **dadurch gekennzeichnet, dass** die wenigstens eine Übertragungsschnittstelle (6) des Handbediengeräts (4) drahtlos ausgebildet ist, und dass die wenigstens eine drahtlose Übertragungsschnittstelle (6) zum drahtlosen Aufbauen oder Umsetzen einer stcucrungstcchnischcn Wirkverbindung zwischen dem Handbediengerät (4) und wenigstens einer der Maschinensteuerungen (3, 3') eingerichtet ist.

11. Verfahren nach Anspruch 10, **dadurch gekennzeichnet, dass** die jeweils vorliegenden, von einer Bedienperson manuell aktivier- und veränderbaren Betätigungszustände des zumindest einen Nothalt-Betätigungselements (8) über die wenigstens eine drahtlose Übertragungsschnittstelle (6) signaltechnisch übertragen und in den Nothalt-Sicherheitsschaltkreis (9, 9') oder in das Sicherheits-Bussystem (22, 22') der ausgewählten oder aktiv angebundenen Maschinensteuerung (3, 3') eingekoppelt werden, sodass in einem aktiven Betriebszustand des Handbediengeräts (4) das zumindest eine Nothalt-Betätigungselement (8) in funktionaler Hinsicht in den Nothalt-Sicherheitsschaltkreis (9, 9') oder in das Sicherheits-Bussystem (22, 22') der ausgewählten oder aktiv angebundenen Maschinensteuerung (3, 3') einkoppelbar ist.

12. Verfahren nach einem der vorhergehenden Ansprüche, **dadurch gekennzeichnet, dass** das zumindest eine Leuchtmittel (23) am Handbediengerät (4) und/oder das zumindest eine diskret ausgebildete Leuchtmittel (24) in oder an dem zumindest einen Nothalt-Betätigungselement (8) des Handbediengeräts (4) durch ein im Handbediengerät (4) angeordnetes, elektronisches Sicherheitsmodul (10) angesteuert wird.

13. Verfahren nach Anspruch 12, **dadurch gekennzeichnet, dass** die plangemäße Funktion des zumindest einen Leuchtmittels (23; 24) mittels dem Sicherheitsmodul (10) und zumindest einem daran angebundenen Sensor (27) überprüft und ein allfälliger Fehlerzustand signalisiert wird.

14. Verfahren nach einem der vorhergehenden Ansprüche, **dadurch gekennzeichnet, dass** zumindest einzelne oder alle Leuchtmittel (23) durch zumindest eine 7-Segmentanzeige (26) im Umfangs- oder Randbereich des Display (14) und/oder am Nothalt-Betätigungselement (8) gebildet sind.

15. Maschinensteuerungssystem (1), insbesondere zur Ausführung des Verfahrens nach einem oder mehreren der vorhergehenden Ansprüche, mit wenigstens einer Maschinensteuerung (3, 3') zur Ausführung von Maschinenoperationen,
mit wenigstens einer Maschine (2, 2'), welche von der wenigstens einen Maschinensteuerung (3, 3') steuerungstechnisch kontrollierbar ist, und
mit wenigstens einem mobilen, von einer Bedienperson tragbaren Handbediengerät (4) zur funktionalen Beeinflussung von wenigstens einer der Maschinensteuerungen (3, 3'),
welches Handbediengerät (4) wenigstens ein Bedienelement (12) zur manuellen Beeinflussung von Maschinenoperationen und wenigstens eine Benutzerschnittstelle mit einem Display (14) zur Beobachtung oder Kontrolle der Maschinenoperationen durch eine Bedienperson aufweist, und
welches Handbediengerät (4) zumindest ein Nothalt-Betätigungselement (8) zur Beendigung von potentiell gefahrbringenden Maschinenoperationen umfasst, wobei die jeweils vorliegenden, von einer Bedienperson manuell aktivier- und veränderbaren Betätigungszustände des zumindest einen Nothalt-Betätigungselements (8) über wenigstens eine Übertragungsschnittstelle (6, 6') in einen Nothalt-Sicherheitsschaltkreis (9, 9') oder in ein Sicherheits-Bussystem (22, 22') der ausgewählten oder aktiv angebundenen Maschinensteuerung (3, 3') einkoppelbar sind,
**dadurch gekennzeichnet, dass**
die wenigstens eine Maschinensteuerung (3, 3') und/oder das Handbediengerät (4) dazu eingerichtet ist, ein schematisches bzw. abstraktes bis hin zu einem fotorealistischen Abbild des Maschinensteuerungssystems (1) oder von Teilbereichen des Maschinensteuerungssystems (1) auf dem Display (14) des Handbediengeräts (4) anzuzeigen,
und dass die wenigstens eine Maschinensteuerung (3, 3') und/oder das Handbediengerät (4) dazu eingerichtet ist, den Wirkungsbereich oder die Wirkungsbereiche (W1, W2, W3, W4) von dem zumindest einen Nothalt-Bctätigungselcmcnt (8) mittels dem Display (14) des Handbediengeräts (4) schematisch abzubilden und zudem mittels selektiver, einfehlersicherer Ansteuerung von zumindest einem Leuchtmittel (23) am Handbediengerät (4) und/oder von zumindest einem diskret ausgebildeten Leuchtmittel (24) in oder an dem zumindest einen Nothalt-Betätigungselement (8) am Handbediengerät (4) anzuzeigen,
und dass die wenigstens eine Maschinensteuerung (3, 3') und/oder das Handbediengerät (4) dazu eingerichtet ist, zur Signalisierung des Wirkungsbereiches oder der Wirkungsbereiche (W1, W2, W3, W4) des zumindest einen Nothalt-Betätigungselements (8) am Display (14) des Handbediengeräts (4) jenen schematisch abgebildeten Teilbereich des Maschinensteuerungssystems grafisch zu markieren und/oder farblich hervorzuheben bzw. jene schematisch abgebildeten Teilbereiche des Maschinensteuerungssystems grafisch zu markieren und/oder farblich hervorzuheben, für welchen Teilbereich bzw. für welche Teilbereiche das Nothalt-Betätigungselement (8) funktional verfügbar ist.

16. Maschinensteuerungssystem nach Anspruch 15, **dadurch gekennzeichnet, dass** die wenigstens einer Maschinensteuerung (3, 3') und/oder das Handbediengerät (4) und/oder eine Steuervorrichtung (5) des Handbediengeräts (4) dazu eingerichtet ist, die Maßnahmen gemäß den Ansprüchen 2 bis 14 umzusetzen.

## Claims

1. A method for operating a machine control system (1) having at least one ma-chine control (3, 3') for performing machine operations,
having at least one machine (2, 2'), which is controlled via a control mechanism by the at least one machine controller (3, 3'), and
having at least one mobile hand-held terminal (4), which is portable by an operator, for functionally influencing at least one of the machine controllers (3, 3'),
which hand-held terminal (4) has at least one operating element (12) for manually influencing machine operations and at least one user interface having a display (14) for monitoring or controlling the machine operations by an operator, and
which hand-held terminal (4) comprises at least one emergency stop actuation element (8) for terminating potentially dangerous machine operations, wherein
the respectively present actuation states of the at least one emergency stop actuation element (8), which actuation states may be manually activated or changed by an operator, are coupled via at least one transmission interface (6, 6') into an emergency stop safety circuit (9, 9') or into a safety bus system (22, 22') of the selected or actively connected machine controller (3, 3'),
**characterized by**
- schematically and/or abstractly up to photorealistically representing the machine control system (1) or portions of the machine control system (1) on the display (14) of the hand-held terminal (4);
- schematically representing the operational area(s) (W1, W2, W3, W4) of the at least one emergency stop actuation element (8) at the hand-held terminal (4) by means of the display (14) of the hand-held terminal (4) and additionally by means of selective, fail-safe controlling of at least one lighting means (23) at the hand-held terminal (4) and/or at least one discrete lighting means (24) in or at the at least one emergency stop actuation element (8) at the hand-held terminal (4),
- wherein, for signaling the operational range(s) (W1, W2, W3, W4) of the at least one emergency stop actuation element (8), that schematically represented portion of the machine control system is graphically marked and/or highlighted in color or those schematically represented portions of the machine control system are graphically marked and/or highlighted in color on the display (14) of the hand-held terminal (4) for which portion(s) the emergency stop actuation element (8) is functionally available.

2. The method according to claim 1, **characterized in that** for signaling the operational range(s) (W1, W2, W3, W4) of the at least one emergency stop actuation element (8), fail-safe activation of that lighting means or those lighting means (23) is carried out which lighting means identifies that portion of the machine control system (1) or which lighting means (23) identify those portions of the machine control system for which portion(s) the emergency stop actuation element (8) is functionally available.

3. The method according to claim 1 or 2, **characterized in that** the discrete lighting means (24) in or at the at least one emergency stop actuation element (8) is activated if the at least one emergency stop actuation element (8) at the hand-held terminal (4) is functionally available.

4. The method according to one of the preceding claims, **characterized in that** on the display (14) of the hand-held terminal (4), the respectively applicable stopping category is additionally indicated by the at least one emergency stop actuation element (8), i.e. category 0 for immediate interruption of the energy supply with respect to the at least one machine operation, or category 1 for stopping movements or functions with respect to the at least one machine operation and subsequent interruption of the energy supply.

5. The method according to one of the preceding claims, **characterized in that** a manually operable and/or automatically operating mode switching means (28) is provided, by means of which a manually initiated or automatically executed change between a (i) stationary operating mode of the hand-held terminal (4) and a (ii) machine influencing mode of the hand-held terminal (4), and vice versa, is carried out.

6. The method according to claim 5, **characterized in that** the at least one emergency stop actuation element (8) at the hand-held terminal (4) is operated or provided in the (i) stationary operating mode of the hand-held terminal (4) as an emergency stop function element for immediate interruption of the energy supply with respect to the at least one machine operation, and that the at least one emergency stop actuation element (8) at the hand-held terminal (4) is operated or provided in the (ii) machine influencing mode of the hand-held terminal (4) for stopping movements or functions with respect to the at least one machine operation and for subsequent interruption of the energy supply.

7. The method according to claim 5 or 6, **characterized in that** an appearance which is colored red at least in sections is assigned to the at least one emergency stop actuation element (8) in the (i) stationary operating mode of the hand-held terminal (4) by activating the at least one lighting means (24), whereas the at least one lighting means (24) is deactivated in the (ii) machine influencing mode.

8. The method according to one of claims 5 to 7, **characterized in that** the mode switching means (28) is influenced by the operator interacting with at least one button on the hand-held terminal (4).

9. The method according to one of claims 5 to 6, **characterized in that** the mode switching means (28) is automatically influenced by depositing the hand-held terminal (4) at a predefined location or by a predefined assignment to and/or attachment at a predefined counterpart.

10. The method according to one of the preceding claims, **characterized in that** the at least one transmission interface (6) of the hand-held terminal (4) is wireless, and that the at least one wireless transmission interface (6) is adapted for wirelessly establishing or implementing a control-related operative connection between the hand-held terminal (4) and at least one of the machine controllers (3, 3').

11. The method according to claim 10, **characterized in that** the respectively present actuation states of the at least one emergency stop actuation element (8), which actuation states may be manually activated or changed by an operator, are signaled via the at least one wireless transmission interface (6) and coupled into the emergency stop safety circuit (9, 9') or into the safety bus system (22, 22') of the selected or actively connected machine control (3, 3'), so that in an active operating state of the hand-held terminal (4), the at least one emergency stop actuation element (8) may be coupled into the emergency stop safety circuit (9, 9') or into the safety bus system (22, 22') of the selected or actively connected machine controller (3, 3') in terms of function.

12. The method according to one of the preceding claims, **characterized in that** the at least one lighting means (23) at the hand-held terminal (4) and/or the at least one discrete lighting means (24) in or at the at least one emergency stop actuation element (8) of the hand-held terminal (4) is controlled by an electronic safety module (10) arranged in the hand-held terminal (4).

13. The method according to claim 12, **characterized in that** the function according to plan of the at least one lighting means (23; 24) is checked by means of the safety module (10) and at least one sensor (27) connected thereto, and a possible error state is signaled.

14. The method according to one of the preceding claims, **characterized in that** at least individual ones or all lighting means (23) are formed by at least one 7-segment display (26) in the peripheral or edge region of the display (14) and/or at the emergency stop actuation element (8).

15. A machine control system (1), in particular for performing the method according to one or multiple of the preceding claims, having at least one machine controller (3, 3') for performing machine operations,
having at least one machine (2, 2'), which is controllable via a control mechanism by the at least one machine controller (3, 3'), and
having at least one mobile hand-held terminal (4), which is portable by an operator, for functionally influencing at least one of the machine controllers (3, 3'),
which hand-held terminal (4) has at least one operating element (12) for manually influencing machine operations and at least one user interface having a display (14) for monitoring or controlling the machine operations by an operator, and
which hand-held terminal (4) comprises at least one emergency stop actuation element (8) for terminating potentially dangerous machine operations, wherein
the respectively present actuation states of the at least one emergency stop actuation element (8), which actuation states may be manually activated or changed by an operator, are coupled via at least one transmission interface (6, 6') into an emergency stop safety circuit (9, 9') or into a safety bus system (22, 22') of the selected or actively connected machine controller (3, 3'),
**characterized in that**
the at least one machine controller (3, 3') and/or the hand-held terminal (4) is adapted for indicating a schematic and/or abstract up to a photorealistic representation of the machine control system (1) or of portions of the machine control system (1) on the display (14) of the hand-held terminal (4),
and that the at least one machine controller (3, 3') and/or the hand-held terminal (4) is adapted for schematically representing the operational range(s) (W1, W2, W3, W4) of the at least one emergency stop actuation element (8) by means of the display (14) of the hand-held terminal (4) and additionally displaying said operational range(s) by means of selective, fail-safe controlling of at least one lighting means (23) at the hand-held terminal (4) and/or at least one discrete lighting means (24) in or at the at least one emergency stop actuation element (8) at the hand-held terminal (4),
and that the at least one machine controller (3, 3') is and/or the hand-held terminal (4) is adapted to, for signaling the operational range(s) (W1, W2, W3, W4) of the at least one emergency stop actuation element (8), that schematically represented portion of the machine control system is graphically marked and/or highlighted in color or those schematically represented portions of the machine control system are graphically marked and/or highlighted in color on the display (14) of the hand-held terminal (4) for which portion(s) the emergency stop actuation element (8) is functionally available.

16. The machine control system according to claim 15, **characterized in that** the at least one machine controller (3, 3') and/or the hand-held terminal (4) and/or a control device (5) of the hand-held terminal (4) is adapted for implementing the measures according to claims 2 to 14.

## Revendications

1. Procédé de fonctionnement d'un système de commande de machine (1) avec au moins une commande de machine (3, 3') pour l'exécution d'opérations de machine,
avec au moins une machine (2, 2') qui est contrôlée par l'au moins une commande de machine (3, 3') et
avec au moins un appareil de commande manuelle (4) mobile, pouvant être porté par un opérateur, pour le contrôle fonctionnel d'au moins une des commandes de machine (3, 3'),
cet appareil de commande manuelle (4) comprenant au moins un élément de commande (12) pour le contrôle manuel d'opérations de machine et au moins une interface utilisateur avec un écran (14) pour la surveillance ou le contrôle des opérations de la machine par un opérateur et
cet appareil de commande manuelle (4) comprenant au moins un élément d'actionnement d'arrêt d'urgence (8) pour l'arrêt d'opérations de la machine potentiellement dangereuses, dans lequel
les états d'actionnement respectifs existants, pouvant être activés et modifiés manuellement par un opérateur, de l'au moins un élément d'actionnement d'arrêt d'urgence (8) peuvent être introduits, par l'intermédiaire d'au moins une interface de transmission (6, 6'), dans un circuit de commutation de sécurité d'arrêt d'urgence (9, 9') ou dans un système de bus de sécurité (22, 22') de la commande de machine (3, 3') sélectionnée ou raccordée activement,
**caractérisé par**
- une représentation schématique ou abstraite, voire photoréaliste, du système de commande de machine (1) ou de parties du système de commande de machine (1) sur l'écran (14) de l'appareil de commande manuelle (4) ;
- une représentation schématique de la zone d'action ou des zones d'action (W1, W2, W3, W4) de l'au moins un élément d'actionnement d'arrêt d'urgence (8) sur l'appareil de commande manuelle (4) au moyen de l'écran (14) de l'appareil de commande manuelle (4) et, en outre, au moyen d'un contrôle sélectif sécurisé d'au moins un moyen d'éclairage (23) sur l'appareil de commande manuelle (4) et/ou d'au moins un moyen d'éclairage (24) séparé dans ou sur l'au moins un élément d'actionnement d'arrêt d'urgence (8) sur l'appareil de commande manuelle (4),
- dans lequel, pour la signalisation de la zone d'action ou des zones d'action (W1, W2, W3, W4) de l'au moins un élément d'actionnement d'arrêt d'urgence (8) sur l'écran (14) de l'appareil de commande manuelle (4), la partie, représentée schématiquement, du système de commande de machine ou les parties, représentées schématiquement, du système de commande de machine, pour laquelle ou pour lesquelles l'élément d'actionnement d'arrêt d'urgence (8) est fonctionnellement disponible, est respectivement sont marquées graphiquement et/ou mises en évidence à l'aide d'une couleur.

2. Procédé selon la revendication 1, **caractérisé en ce que**, pour la signalisation de la zone d'action ou des zones d'action (W1, W2, W3, W4) de l'au moins un élément d'actionnement d'arrêt d'urgence (8), une activation sécurisée du moyen d'éclairage ou des moyens d'éclairage (23), ce moyen d'éclairage identifiant la partie du système de commande de machine (1) ou ces moyens d'éclairage (23) identifiant les parties du système de commande de machine (1) pour laquelle ou pour lesquelles l'élément d'actionnement d'arrêt d'urgence (8) est fonctionnellement disponible.

3. Procédé selon la revendication 1 ou 2, **caractérisé en ce que**, dans le cas d'une disponibilité fonctionnelle de l'au moins un élément d'actionnement d'arrêt d'urgence (8) sur l'appareil de commande manuelle (4), le moyen d'éclairage (24) séparé dans ou sur l'au moins un élément d'actionnement d'arrêt d'urgence (8) est activé.

4. Procédé selon l'une des revendications précédentes, **caractérisé en ce que**, sur l'écran (14) de l'appareil de commande manuelle (4), est affichée, en outre, la catégorie d'arrêt respectivement valide de l'au moins un élément d'actionnement d'arrêt d'urgence (8), donc la catégorie 0 pour une interruption immédiate de l'alimentation concernant l'au moins une opération de machine, ou la catégorie 1 pour une immobilisation des mouvements ou des fonctions concernant l'au moins une opération de machine puis l'interruption de l'alimentation.

5. Procédé selon l'une des revendications précédentes, **caractérisé en ce qu'**un moyen de commutation de mode (28), pouvant être contrôlé manuellement et/ou fonctionnant de manière automatisée, est prévu, avec lequel est effectué un passage, initié manuellement ou exécuté de manière automatisée, d'un (i) mode de fonctionnement stationnaire de l'appareil de commande manuelle (4) à un (ii) mode de contrôle de machine d'appareil de commande manuelle (4) et inversement.

6. Procédé selon la revendication 5, **caractérisé en ce que** l'au moins un élément d'actionnement d'arrêt d'urgence (8) sur l'appareil de commande manuelle (4) dans (i) le mode de fonctionnement stationnaire de l'appareil de commande (4), fonctionne ou est conçu comme un élément fonctionnel d'arrêt d'urgence pour l'interruption immédiate de l'alimentation concernant l'au moins une opération de machine et **en ce que** l'au moins un élément d'actionnement d'arrêt d'urgence (8) sur l'appareil de commande manuelle (4) dans (ii) le mode de contrôle de machine de l'appareil de commande manuelle (4) fonctionne ou est conçu pour l'immobilisation des mouvements ou des fonctions concernant l'au moins une opération de machine puis pour l'interruption de l'alimentation.

7. Procédé selon la revendication 5 ou 6, **caractérisé en ce que**, à l'au moins un élément d'actionnement d'arrêt d'urgence (8) dans (i) le mode de fonctionnement stationnaire de l'appareil de commande manuelle (4) par l'activation de l'au moins un moyen d'éclairage (24), correspond un aspect coloré en rouge au moins à certains endroits, tandis que dans (ii) le mode de contrôle de la machine, l'au moins un moyen d'éclairage (24) est désactivé.

8. Procédé selon l'une des revendications 5 à 7, **caractérisé en ce que** le moyen de commutation de mode (28) est contrôlé par l'interaction de l'opérateur avec au moins un bouton sur l'appareil de commande manuelle (4).

9. Procédé selon l'une des revendications 5 à 6, **caractérisé en ce que** le moyen de commutation de mode (28) est contrôlé de manière automatisée par le dépôt de l'appareil de commande manuelle (4) à un endroit prédéfini ou par une relation et/ou une installation prédéfinie par rapport une station distante prédéfinie.

10. Procédé selon l'une des revendications précédentes, **caractérisé en ce que** l'au moins une interface de transmission (6) de l'appareil de commande manuelle (4) est conçue sans fil, et **en ce que** l'au moins une interface de transmission (6) sans fil est conçue pour l'établissement ou la mise en place d'une liaison fonctionnelle de commande sans fil entre l'appareil de commande manuelle (4) et au moins une des commandes de la machine (3, 3').

11. Procédé selon la revendication 10, **caractérisé en ce que** les états respectivement existants, pouvant être activés et modifiés manuellement par un opérateur, de l'au moins un élément d'actionnement d'arrêt d'urgence (8), sont transmis, par l'intermédiaire de l'au moins une interface de transmission (6) sans fil, à l'aide d'un signal et introduits dans le circuit de commutation de sécurité d'arrêt d'urgence (9, 9') ou dans le système de bus de sécurité (22, 22') de la commande de machine (3, 3') sélectionnée ou raccordée activement, de façon à ce que, dans un état de fonctionnement actif de l'appareil de commande manuelle (4), l'au moins un élément d'actionnement d'arrêt d'urgence (8) puisse être intégré, d'un point de vue fonctionnel, dans le circuit de commutation de sécurité d'arrêt d'urgence (9, 9') ou dans le système de bus de sécurité (22, 22') de la commande de machine (3, 3') sélectionnée ou raccordée activement.

12. Procédé selon l'une des revendications précédentes, **caractérisé en ce que** l'au moins un moyen d'éclairage (23) sur l'appareil de commande manuelle (4) et/ou l'au moins un moyen d'éclairage séparé (24) dans ou sur l'au moins un élément d'actionnement d'arrêt d'urgence (8) de l'appareil de commande manuelle (4) est contrôlé par un module de sécurité électronique (10) disposé dans l'appareil de commande manuelle (4).

13. Procédé selon la revendication 12, **caractérisé en ce que** le fonctionnement planifié de l'au moins un moyen d'éclairage (23 ; 24) est vérifié au moyen du module de sécurité (10) et d'au moins un capteur (27) qui y est relié et un état d'erreur éventuel est signalé.

14. Procédé selon l'une des revendications précédentes, **caractérisé en ce qu'**au moins certains ou tous les moyens d'éclairage (23) sont constitués d'au moins un affichage à 7 segments (26) au niveau de la périphérie ou du bord de l'écran (14) et/ou sur l'élément d'actionnement d'arrêt d'urgence (8).

15. Système de commande de machine (1), plus particulièrement pour l'exécution du procédé selon l'une ou plusieurs des revendications précédentes, avec au moins une commande de machine (3, 3') pour l'exécution d'opérations de machine,
avec au moins une machine (2, 2') qui est contrôlée par l'au moins une commande de machine (3, 3') et
avec au moins un appareil de commande manuelle (4) mobile, pouvant être porté par un opérateur, pour le contrôle fonctionnel d'au moins une des commandes de machine (3, 3'),
cet appareil de commande manuelle (4) comprenant au moins un élément de commande (12) pour le contrôle manuel d'opérations de machine et au moins une interface utilisateur avec un écran (14) pour la surveillance ou le contrôle des opérations de la machine par un opérateur et
cet appareil de commande manuelle (4) comprenant au moins un élément d'actionnement d'arrêt d'urgence (8) pour l'arrêt d'opérations de la machine potentiellement dangereuses, dans lequel
les états d'actionnement respectifs existants, pouvant être activés et modifiés manuellement par un opérateur, de l'au moins un élément d'actionnement d'arrêt d'urgence (8) peuvent être introduits, par l'intermédiaire d'au moins une interface de transmission (6, 6'), dans un circuit de commutation de sécurité d'arrêt d'urgence (9, 9') ou dans un système de bus de sécurité (22, 22') de la commande de machine (3, 3') sélectionnée ou raccordée activement,
**caractérisé en ce que**
l'au moins une commande de machine (3, 3') et/ou l'appareil de commande manuelle (4) est conçu pour afficher une représentation schématique ou abstraite, voire photoréaliste, du système de commande de machine (1) ou de parties du système de commande de machine (1) sur l'écran (14) de l'appareil de commande manuelle (4),
et **en ce que** l'au moins une commande de machine (3, 3') et/ou l'appareil de commande manuelle (4) est conçu pour représenter schématiquement la zone d'action ou les zones d'action (W1, W2, W3, W4) de l'au moins un élément d'actionnement d'arrêt d'urgence (8) sur l'appareil de commande manuelle (4) au moyen de l'écran (14) de l'appareil de commande manuelle (4) et, en outre, d'afficher, au moyen d'un contrôle sélectif sécurisé d'au moins un moyen d'éclairage (23) sur l'appareil de commande manuelle (4) et/ou d'au moins un moyen d'éclairage (24) séparé dans ou sur l'au moins un élément d'actionnement d'arrêt d'urgence (8) sur l'appareil de commande manuelle (4),
et **en ce que** l'au moins une commande de machine (3,3') et/ou l'appareil de commande manuelle (4) est conçu, pour la signalisation de la zone d'action ou des zones d'action (W1, W2, W3, W4) de l'au moins un élément d'actionnement d'arrêt d'urgence (8) sur l'écran (14) de l'appareil de commande manuelle (4), marquer graphiquement et/ou mettre en évidence, à l'aide d'une couleur, la partie, représentée schématiquement, du système de commande de machine ou les parties, représentées schématiquement, du système de commande de machine, pour laquelle ou pour lesquelles l'élément d'actionnement d'arrêt d'urgence (8) est fonctionnellement disponible.

16. Système de commande de machine selon la revendication 15, **caractérisé en ce que** l'au moins une commande de machine (3, 3') et/ou l'appareil de commande manuelle (4) et/ou un dispositif de commande (5) de l'appareil de commande manuelle (4) est conçu pour appliquer les mesures selon les revendications 2 à 14.
